# EUROPEAN PATENT APPLICATION

(11) **EP 2 479 663 A1**
(43) Date of publication of application: **25.07.2012**
(21) Application number: 10843690.8
(22) Date of filing: 04.06.2010
(51) Int. Cl.: G06F 9/44, H04M 1/725

(54) **RESOURCE MANAGEMENT METHOD AND SYSTEM**

(30) Priority: 21.01.2010 CN 201010001066
(71) Applicant: ZTE Corporation, Shenzhen, Guangdong 518057 (CN)
(72) Inventor: YANG, Yi, Guangdong 518057 (CN)
(74) Representative: Manitz, Finsterwald & Partner GbR
(86) International application number: PCT/CN2010/073549
(87) International publication number: WO 2011/088650

(57) **Abstract**

The present invention discloses a method and system for managing resources, wherein the method comprises: a resource editor accepts that a user adds a resource and defines an ID of the resource (S 102); and a resource compiling tool converts the data in the resource editor into a source file and stores the source file in a resource management system of a mobile terminal, wherein the data includes the resource added and the ID thereof (S104). The present invention can achieve uniform management of the resources, and examine the resources conveniently when needed.

## Description

### Field of the Invention

The present invention relates to the communication field, and in particular to a method and system for managing resource.

### Background of the Invention

Currently, in the mobile software development field, there utilizes the manner of making the definition by the one who uses it, but not the uniform management, for the resources (such as picture, international string, ring tone) used in the MMI (Man Machine Interface) development. Further there is also no uniform interface for accessing the resources and the resources are directly used as global variables. This will result in the following problems:
(1) the resource definitions are dispersed in each file of the development code of the applications of the mobile terminal and cannot be examined (viewed) and managed conveniently;
(2) the interfaces for accessing the resources are not unified, which makes the developers who use the resources have to learn the particular attributes of the resources, for example it is a file type resource or an embedded resource;
(3) the coupling of the resources and the development code of the applications is strong Once the resources are changed, it has to change a lot of the code, thus increasing the work load of the developers and decreasing working efficiency.

### Summary of the Invention

The one main object of the present invention is to provide a method and system for managing the resource so as to at least solve the above problem.

A method for managing resources based on a mobile terminal is provided according to one aspect of the present invention, which method comprises: accepting by a resource editor that a user adds a resource and defines an ID of the resource; and converting by a resource compiling tool the data in the resource editor into a source file and storing the source file in a resource management system of a mobile terminal, wherein the data includes the added resource and the ID thereof.

Preferably, after a resource compiling tool converts the data in the resource editor into a source file and stores the source file in a resource management system of a mobile terminal, the method further comprises: transmitting, by an application of the mobile terminal, an ID of a resource to be accessed into the resource management system of the mobile terminal; and returning, by the resource management system of the mobile terminal, a structure body of the resource to the application of the mobile terminal using the source file according to the ID.

Preferably, the step of accepting by a resource editor that a user adds a resource and defines an ID of the resource comprises: when a resource is a file type resource, accepting by the resource editor that a user add the resource, defines an ID of the resource and designates a path of the resource in the mobile terminal.

Preferably, the source file comprises: a structure body converted from an embedded resource in the resource editor and a corresponding table of resource and ID, with the corresponding table of resource and ID including an ID of a resource and resource information corresponding to the ID, wherein the resource information includes the name of a structure body converted from the resource corresponding to the ID and/or a path of the resource.

Preferably, when the resource is an embedded resource, the step of transmitting by an application of a mobile terminal an ID of a resource to be accessed into a resource management system of the mobile terminal comprises: calling a resource management interface by the application to transmit an ID of a resource to be accessed into the resource management system of the mobile terminal; and the step of returning, by the resource management system of the mobile terminal, the structure body of the source to an application of the mobile terminal using the source file according to the ID comprises: searching, by the resource management system of the mobile terminal, the name of a structure body converted from the resource corresponding to the ID in the corresponding table of resource and ID using the ID; searching, by the resource management system of the mobile terminal, the structure body of the resource using the name of the structure body; and returning, by the resource management system of the mobile terminal, the searched structure body of the resource to the application.

Preferably, when the resource is a file type resource, the step of transmitting, by an application of the mobile terminal, an ID of a resource to be accessed into a resource management system of the mobile terminal comprises: calling, by the application, a resource management interface to transmit an ID of a resource to be accessed into the resource management system of the mobile terminal; and the step of returning, by the resource management system of the mobile terminal, the structure body of the resource to an application of the mobile terminal using the source file according to the ID comprises: searching, by the resource management system of the mobile terminal, a path of the resource corresponding to the ID in the corresponding table of resource and ID using the ID; searching, by the resource management system of the mobile terminal, the resource using the path of the resource; loading, by the resource management system of the mobile terminal, the resource to be a structure body; storing, by the resource management system of the mobile terminal, the ID and the memory address of the structure body loaded from the resource corresponding to the ID; and returning, by the resource management system of the mobile terminal, the structure body of the resource to the application.

Preferably, after the resource management system of the mobile terminal returns the structure body of the source to an application of the mobile terminal using the source file according to the ID, the method further comprises: transmitting, by the application of the mobile terminal, an ID of a resource to be released into the resource management system of the mobile terminal; and releasing, by the resource management system of the mobile terminal, the resource according to the ID.

Preferably, when the resource is a file type resource, the step of transmitting, by an application of the mobile terminal , an ID of a resource to be released into a resource management system of the mobile terminal comprises: calling, by the application, the resource management interface to transmit an ID of a resource to be released into the resource management system of the mobile terminal; and the step of releasing, by the resource management system of the mobile terminal, the resource according to the ID comprises: searching, by the resource management system of the mobile terminal, a stored memory address of the structure body loaded from the resource corresponding to the ID using the ID; and releasing, by the resource management system of the mobile terminal, the memory space corresponding to the memory address.

Preferably, after a resource compiling tool converts the data in the resource editor into a source file and stores the source file in a resource management system of a mobile terminal, the method further comprises: accepting, by the corresponding table of resource and ID in the source file, that a user modifies resource information corresponding to an ID.

Preferably, the resource comprises: a picture, an international language string, a ring tone, a window layout, and a theme.

A system for managing resources is provided according to another aspect of the present invention, which system comprises: the resource editor is configured to accept that a user adds a resource and defines an ID of the resource; and the resource management system is configured to store a source file converted from the data in the resource editor by a resource compiling tool, wherein the data includes the added resource and the ID thereof.

Preferably, the resource editor is contained in a resource management system of a personal computer PC.

By virtue of the present invention, since a resource is added and an ID of the resource is defined in a resource editor and the above data in the resource editor are compiled into a source file which is stored in a resource management system of a mobile terminal for uniform management, so as to solve the problem that the resources are not managed uniformly and the resources cannot be examined and managed conveniently in relevant art. Thus a method for managing resources uniformly is provided, which method is capable of managing the resources conveniently and high efficiently by adding resources and defining the ID of the resources by a resource editor and storing a source file, obtained from conversion and including the corresponding relationship of the resource and the ID, into a resource management system of a mobile terminal for uniform management, and thus the resources can be managed uniformly, conveniently and high efficiently and the resources can be examined conveniently when needed.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flow chart of a method for managing resources based on a mobile terminal according to the embodiments of the present invention;
Fig. 2 is a structure schematic diagram of a system for managing resources according to the embodiments of the present invention;

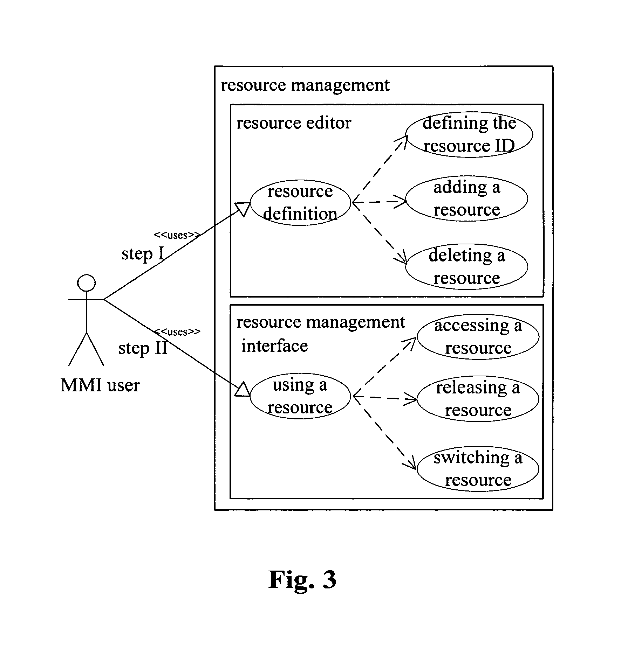

Fig. 3 is a flow chart of a method for managing resources according to the preferred embodiments of the present invention;
Fig. 4 is a flow chart of accessing resources in a method for managing resources according to the preferred embodiments of the present invention; and
Fig. 5 is a flow chart of releasing resources in a method for managing resources according to the preferred embodiments of the present invention.

### Detailed Description of Embodiments

The present invention will now be described in detail with reference to the drawings and in conjunction with embodiments in the following. It needs to note that the embodiments of the present invention and the features in the embodiments can be combined with each other if there is no conflict.

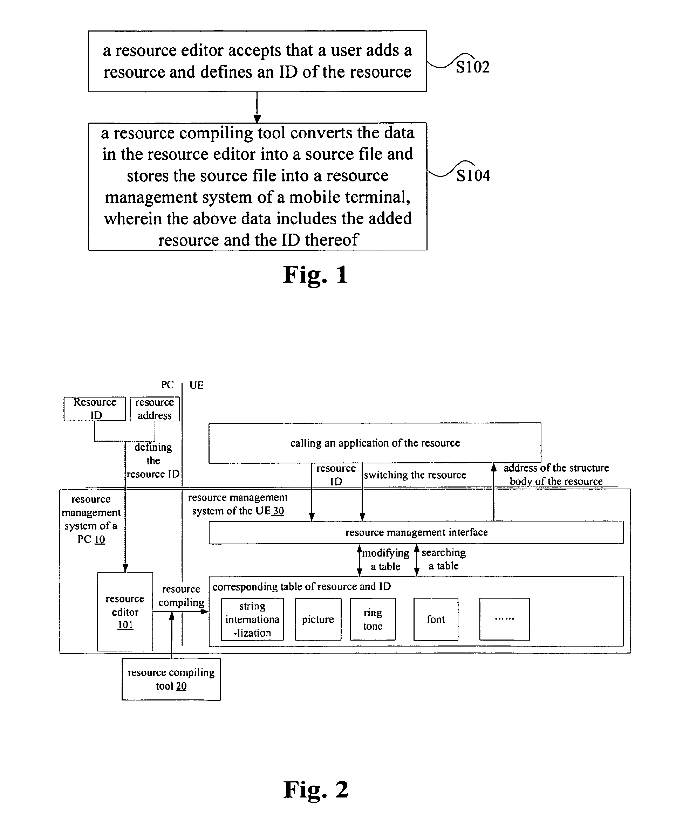

Fig. 1 is a flow chart of a method for managing resource(s) based on a mobile terminal according to the embodiments of the present invention, and the method comprises the following steps:
step S 102: a resource editor accepts that a user adds a resource and defines an ID of the resource; and
step S 104: a resource compiling tool (such as being a VC compiler) converts the data in the resource editor into a source file and stores the source file in a resource management system of a mobile terminal, wherein the above data includes the added resource and the ID thereof.

In this embodiment, since a resource is added and an ID of the resource is defined in a resource editor and the above data in the resource editor are compiled into a source file which is stored in a resource management system of a mobile terminal for uniform management, thus the problem that the resources are not managed uniformly and the resources cannot be examined and managed conveniently in relevant art is solved. This embodiment provides a method for managing resources uniformly, which method is capable of managing the resources uniformly, conveniently and high efficiently by adding resources and defining the ID of the resources by a resource editor and storing a source file, obtained from conversion and including the corresponding relationship of the resources and ID, into a resource management system of a mobile terminal for uniform management, and thus the resources can be managed uniformly, conveniently and high efficiently and the resources can be examined conveniently when needed.

Preferably, after step S104, it further comprises: an application of the mobile terminal transmits an ID of a resource to be accessed into the resource management system of the mobile terminal; and the resource management system of the mobile terminal returns the structure body of this resource to the application of the mobile terminal using the source file according to this ID.

This preferred embodiment provides a particular embodiment of accessing by the application of a mobile terminal the corresponding resource of an ID according to this ID. The development code in the application of the mobile terminal can only have an ID of a resource and does not need to be directly associated with the name of the resource, which reduces the coupling degree of the resource and the development code of the application. The step of returning the structure body of this resource to an application of the mobile terminal can be the step of returning the memory address of the structure body of the resource when implemented actually.

In this case, step S102 includes: when the resource is a file type resource, the resource editor accepts that a user adds a resource, defines an ID of the resource and designates a path of the resource. As to an embedded resource, it only needs to add a resource and define an ID of this resource.

In this case, the above source file includes: a structure body converted from an embedded resource in the resource editor and a corresponding table of resource and ID, with the corresponding table of resource and ID including an ID of a resource and resource information corresponding to the ID, wherein the resource information includes the name of the structure body converted from the corresponding resource of an ID and/or the path of a resource.

Preferably, when the resource is an embedded resource, the step of transmitting, by an application of the mobile terminal, an ID of a resource to be accessed into a resource management system of the mobile terminal comprises: the application calls a resource management interface to transmit an ID of a resource to be accessed into the resource management system of the mobile terminal; and
the step of returning, by the resource management system of the mobile terminal, the structure body of the resource to an application of the mobile terminal using the source file according to an ID comprises: the resource management system of the mobile terminal searches the name of the structure body converted from the corresponding resource of this ID in the corresponding table of resource and ID using this ID; the resource management system of the mobile terminal searches the structure body of this resource using the name of this structure body; and the resource management system of the mobile terminal returns the searched structure body of the resource to the application.

Preferably, when the resource is a file type resource, the step of transmitting, by an application of the mobile terminal, an ID of a resource to be accessed into a resource management system of the mobile terminal comprises: the application calls a resource management interface to transmit an ID of a resource to be accessed into the resource management system of the mobile terminal; and
the step of returning, by the resource management system of the mobile terminal, the structure body of a resource to an application of the mobile terminal using the source file according to an ID comprises: the resource management system of the mobile terminal searches a path of the corresponding resource of this ID in the corresponding table of resource and ID using this ID; the resource management system of the mobile terminal searches this resource using the path of this resource; the resource management system of the mobile terminal loads this resource to be a structure body; the resource management system of the mobile terminal stores this ID and the memory address of the structure body loaded from the corresponding resource of this ID; and the resource management system of the mobile terminal returns the structure body of this resource to the application.

The above preferred embodiments provide particular embodiments of accessing an embedded resource and a file type resource by an application of a mobile terminal respectively. Thus, the resources do not have to be stored in the memory but can be loaded as required. The step of returning the structure body of this resource to an application of the mobile terminal can be the step of returning the memory address of the structure body of the resource when implemented actually.

Preferably, after the resource management system of the mobile terminal returns the structure body of the resource to an application of the mobile terminal using the source file according to an ID, the method further comprises: the application of the mobile terminal transmits an ID of a resource to be released into the resource management system of the mobile terminal; and the resource management system of the mobile terminal releases the resource according to this ID.

In this case, when the resource is a file type resource, the step of transmitting, by an application of the mobile terminal, an ID of a resource to be released into a resource management system of the mobile terminal comprises: the application calls a resource management interface to transmit an ID of a resource to be released into the resource management system of the mobile terminal; and
the step of releasing, by the resource management system of the mobile terminal, the resource according to an ID comprises: the resource management system of the mobile terminal searches the stored memory address of the structure body loaded from the corresponding resource of this ID using this ID; and the resource management system of the mobile terminal releases the corresponding memory space of this memory address.

This preferred embodiment provides a particular embodiment of calling, by an application of a mobile terminal, a resource management interface to release a resource according to an ID. As to an embedded resource, after an application of a mobile terminal transmits an ID to a resource management system of the UE by a resource management interface, the resource management system of the UE judges that the corresponding resource of this ID is an embedded resource and it does not need to release the memory space.

In the above preferred embodiment, since the ID is used as the unique identifier of a resource when the defining is performed, an application only needs to call a uniform interface according to the ID to perform operations, such as accessing a resource and releasing a resource, for the resource, but does not need to consider the particular state of the resource, so as to solve the problem in relevant art that there is no uniform resource access interface and the developers using the resources must learn the particular attributes of the resources. The resource management system shields the attributes of the resources and binds the ID with the resource together, the (MMI) developers do not need to consider the storage manner of the resources and even how to release the resources, but only need to know the IDs of the resources, which can relieve the load of the developers and improve code quality.

Additionally, since an application of a mobile terminal accesses and releases resources according to the ID (i.e. there is only ID in the development code of the application of the mobile terminal), the problem is solved that the coupling of the resource and the development code of the mobile terminal is strong and once the resource is changed, it has to change code in large amount, which reduces the coupling degree of the application and resource, and only the ID of the resource exists in the development code of the application; since the ID of the resource is defined by the developers themselves, the resource management system is responsible for the corresponding relationship between the ID and the resource. Accordingly, the application of the mobile terminal is not directly associated with the name of the resource, which reduces coupling degree, and makes it maintained relatively conveniently.

After step S104, the method further comprises: the corresponding table of resource and ID in the source file accepts that a user modifies the corresponding resource information of an ID. In this case, the resource comprises: a picture, an international language string, a ring tone, a window layout and a theme.

This preferred embodiment achieves dynamically switching resources by modifying the corresponding resource information of an ID in the corresponding table of resource and ID. The operation of storing the corresponding relationship of ID and resource dynamically can make the search of the resource convenient and make the resource switching (of the theme) convenient when running. Since there is only the ID of the resource in the development code of the application of the mobile terminal and the resource management system is responsible for the corresponding relationship of ID and resource, the resources can be switched by modifying this corresponding relationship without changing code. The module required to switch resources has an international string and a theme, other resources including a interface can also be switched when running. Additionally, the switched new resources do not have to be all stored in the memory but can be loaded as required.

Fig. 2 is a structure schematic diagram of a system for managing resource(s) according to the embodiments of the present invention, which system comprises: a resource editor **101** and a resource management system **30** of a mobile terminal, wherein the resource editor **101** is used for accepting that a user adds a resource and defines an ID of the resource; and the resource management system **30** is used for storing a source file converted from the data in the resource editor **101** by a resource compiling tool **20**, wherein the data includes the added resource and the ID thereof.

In this case, the resource editor **101** is included in a resource management system **10** of a PC.

The method for managing resources of the present invention will be described in detail in conjunction with Figs. 1 and 2. The management of resources mainly includes the defining, accessing, releasing and switching of the resources. ID is used as the unique identifier of a resource, and the application of the mobile terminal performs operations for the resource according to the ID and at the same time completes the uniform management of resources in conjunction with the resource compiling tool (see Fig. 1). As shown in Fig. 2 (taking a picture resource as an example), the method for managing resources of the present invention comprises the following steps:

### Step I: definition of a resource.

step 1: a picture resource is added in a resource editor like EXCEL interface and an ID of this picture resource is defined at the same time; if the picture resource is stored in a file system of the UE when running the picture resource, it further needs to designate a path of this picture resource; and the operation of deleting the resource is similar to the operation of adding the resource, which will not be described here redundantly;
Step 2: a resource compiling tool is used to perform the resource compiling for the data in the resource editor, convert it into a source file, and store the source file into a resource management system of the mobile terminal. The source file mainly includes two parts: one part is a structure body converted from an embedded resource (i.e. embedded resource, which resource is stored in the memory); and the other part is the corresponding table of the generated resource and the ID, i.e. structure body array of resource information. This structure body array includes an ID and the corresponding resource information of the ID, with the resource information including the structure body name of the resource (for an embedded resource), the path of the resource (for a file type resource), etc.

Step II: the usage of a resource.
Step 3: An application (development code) of a mobile terminal calls a uniform resource management interface to access resources by transmitting resource ID into the resource management system of the mobile terminal and acquires the picture. The uniform resource management interface shields the particular storing manner (file or memory) of the resources, and the returned result is the structure body of the picture resource in the memory.

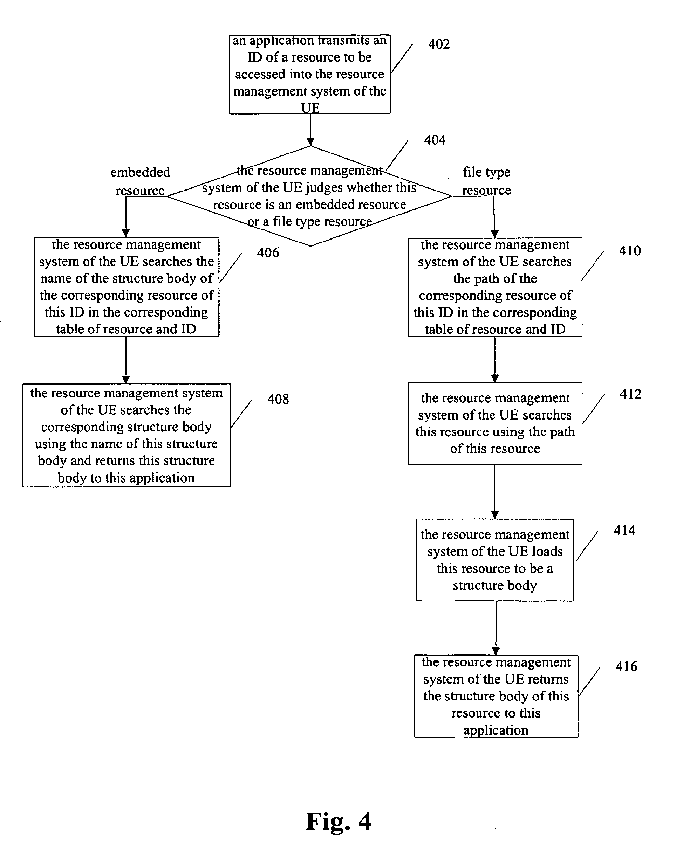

As shown in Fig. 4, the particular resource access procedure includes:
step 402: the application of the mobile terminal calls the resource management interface to transmit an ID of a resource to be accessed into the resource management system of the UE;
step 404: the resource management system of the UE judges whether this resource is an embedded resource or a file type resource according to this ID, if it is an embedded resource, then going to step 406; and if it is a file type resource, then going to step 410;
step 406: the resource management system of the UE searches the name of the structure body of the corresponding resource of this ID in the corresponding table of resource and ID;
step 408: the resource management system of the UE searches the corresponding structure body using the name of this structure body and returns this structure body to this application;
step 410: the resource management system of the UE searches the path of the corresponding resource of this ID in the corresponding table of resource and ID;
Step 412: The resource management system of the UE searches this resource using the path of this resource;
step 414: the resource management system of the UE loads this resource to be a structure body and stores an ID of this resource, the memory address of the memory space occupied by the structure body of this resource, and the corresponding relationship between the ID and the memory address; and
step 416: the resource management system of the UE returns the structure body of this resource to this application.

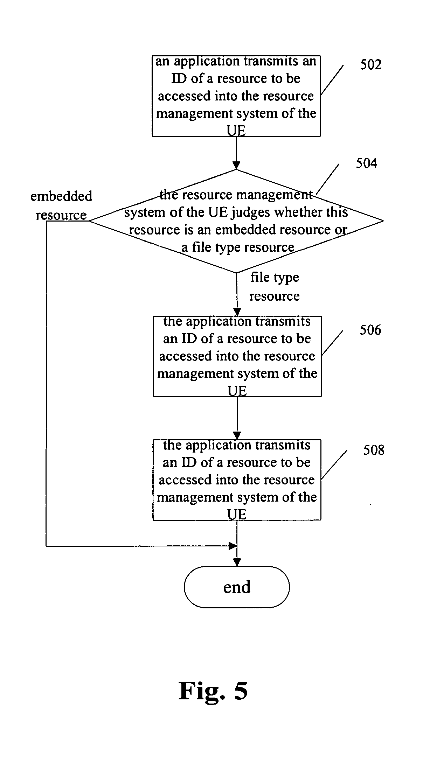

As shown in Fig. 5, the particular resource release procedure includes:
step 502: the application of the mobile terminal calls the resource management interface to transmit an ID of a resource to be released into the resource management system of the UE;
step 504: the resource management system of the UE judges whether this resource is an embedded resource or a file type resource according to this ID, if it is an embedded resource, then ending the procedure; and if it is a file type resource, then going to step 506;
step 506: the resource management system of the UE searches the memory address of the memory space occupied by the structure body of the corresponding resource using this ID; and
step 508: the resource management system of the UE releases the corresponding memory space of this memory address.

The interfaces called during the access of the resources and the release of the resources in the above steps are called by transmitting a unique resource ID.
step 4: the dynamical resource switching can be achieved by modifying the corresponding table of resource and ID when the application is run. The MMI developers complete the switching of picture resources by modifying the corresponding table of resource and ID in the development code of the application of the mobile terminal. The switching of pictures can be applied in the switching of themes. The switching of frequently-used international language can also be taken as the switching of string resource. If the window layout is taken as a resource, then the window layout can also be switched when running. This greatly enlarges the available functions of the mobile terminal.

The above preferred embodiments achieve the uniform management of resources of the entire MMI project, which is convenient for resource maintenance. Uniform resource management is similar to a resource pool, from which the resources can be directly selected when designing a interface or making a theme, and each kind of resources can be divided according to a development module. Such resource operation maintenance is more convenient and ordered.

Additionally, it is easy for the resource management system to combine with a tool at PC side (including a resource editor and a resource compiling tool). The tool at PC side provides resource editing and resource compiling. The automatically generated code (i.e. source file) and the resource management interface support the user together. The operation needed for adding a resource by a user is to define an ID of this resource in the resource editor; and the access and release of the resource is to call an interface (i.e. resource management interface) of the resource management system and transmit an ID of a resource.

It can be seen from the above description that the present invention achieves the following technical effects:
(1) the efficiency of the MMI development can be improved and it is more convenient to manage the mobile terminal resources and it is capable for rapidly completing the operations from the definition of the resource to the access, release, change of the resource, thus improving the efficiency of developing and maintaining MMI code; and
(2) the developers can define, access, release, and change the resource conveniently and high efficiently in combination with the use manner of the resource made by the MMI developers, thus relieving the burden and workload of the MMI developers.

Apparently, those skilled in the art should understand that the above modules and steps of the present invention can be achieved by using general purpose calculating device, can be integrated in one calculating device or distributed on a network which consists of a plurality of calculating devices; Alternatively, the modules and the steps of the present invention can be realized by using the executable program code of the calculating device, and thereby they can be stored in the storing device and executed by the calculating device, and in some cases, the steps shown or described can be carried out in a different order, or they are made into integrated circuit module respectively, or a plurality of modules or steps thereof are made into one integrated circuit module. Thus, the present invention is not limited to the combination of any specific hardware and software.

Above description is only to illustrate the preferred embodiments but not to limit the present invention. Various alterations and changes to the present invention are apparent to those skilled in the art. The scope defined in the present invention shall comprise any modification, equivalent substitution and improvement within the spirit and principle of the present invention.

## Claims

1. A method for managing a resource based on a mobile terminal, **characterized by** comprising:
accepting by a resource editor that a user adds a resource and defines an ID of the resource; and
converting by a resource compiling tool the data in the resource editor into a source file and storing the source file in a resource management system of a mobile terminal, wherein the data includes the added resource and the ID thereof.

2. The method according to claim 1, after a resource compiling tool converts the data in the resource editor into a source file and stores the source file in a resource management system of a mobile terminal, **characterized by** further comprising:
transmitting, by an application of the mobile terminal, an ID of a resource to be accessed into the resource management system of the mobile terminal; and
returning, by the resource management system of the mobile terminal, a structure body of the resource to the application of the mobile terminal using the source file according to the ID.

3. The method according to claim 1 or 2, **characterized in that** the step of accepting by a resource editor that a user adds a resource and defines an ID of the resource comprises:
when a resource is a file type resource, accepting by the resource editor that a user add the resource, defines an ID of the resource and designates a path of the resource in the mobile terminal.

4. The method according to claim 1 or 2, **characterized in that** the source file comprises: a structure body converted from an embedded resource in the resource editor and a corresponding table of resource and ID, with the corresponding table of resource and ID including an ID of a resource and resource information corresponding to the ID, wherein the resource information includes the name of a structure body converted from the resource corresponding to the ID and/or a path of the resource.

5. The method according to claim 4, **characterized in that** when the resource is an embedded resource,
the step of transmitting by an application of a mobile terminal an ID of a resource to be accessed into a resource management system of the mobile terminal comprises: calling a resource management interface by the application to transmit an ID of a resource to be accessed into the resource management system of the mobile terminal; and
the step of returning, by the resource management system of the mobile terminal, the structure body of the source to an application of the mobile terminal using the source file according to the ID comprises: searching, by the resource management system of the mobile terminal, the name of a structure body converted from the resource corresponding to the ID in the corresponding table of resource and ID using the ID; searching, by the resource management system of the mobile terminal, the structure body of the resource using the name of the structure body; and returning, by the resource management system of the mobile terminal, the searched structure body of the resource to the application.

6. The method according to claim 4, **characterized in that** when the resource is a file type resource,
the step of transmitting, by an application of the mobile terminal, an ID of a resource to be accessed into a resource management system of the mobile terminal comprises: calling, by the application, a resource management interface to transmit an ID of a resource to be accessed into the resource management system of the mobile terminal; and
the step of returning, by the resource management system of the mobile terminal, the structure body of the resource to an application of the mobile terminal using the source file according to the ID comprises: searching, by the resource management system of the mobile terminal, a path of the resource corresponding to the ID in the corresponding table of resource and ID using the ID; searching, by the resource management system of the mobile terminal, the resource using the path of the resource; loading, by the resource management system of the mobile terminal, the resource to be a structure body; storing, by the resource management system of the mobile terminal, the ID and the memory address of the structure body loaded from the resource corresponding to the ID; and returning, by the resource management system of the mobile terminal, the structure body of the resource to the application.

7. The method according to claim 6, after the resource management system of the mobile terminal returns the structure body of the source to an application of the mobile terminal using the source file according to the ID, **characterized by** further comprising:
transmitting, by the application of the mobile terminal, an ID of a resource to be released into the resource management system of the mobile terminal; and
releasing, by the resource management system of the mobile terminal, the resource according to the ID.

8. The method according to claim 7, **characterized in that** when the resource is a file type resource,
the step of transmitting, by an application of the mobile terminal , an ID of a resource to be released into a resource management system of the mobile terminal comprises: calling, by the application, the resource management interface to transmit an ID of a resource to be released into the resource management system of the mobile terminal; and
the step of releasing, by the resource management system of the mobile terminal, the resource according to the ID comprises: searching, by the resource management system of the mobile terminal, a stored memory address of the structure body loaded from the resource corresponding to the ID using the ID; and releasing, by the resource management system of the mobile terminal, the memory space corresponding to the memory address.

9. The method according to claim 4, after a resource compiling tool converts the data in the resource editor into a source file and stores the source file in a resource management system of a mobile terminal, **characterized by** further comprising:
accepting, by the corresponding table of resource and ID in the source file, that a user modifies resource information corresponding to an ID.

10. The method according to claim 9, **characterized in that** the resource comprises: a picture, an international language string, a ring tone, a window layout, and a theme.

11. A resource management system, **characterized by** comprising: a resource editor and a resource management system of a mobile terminal, wherein
the resource editor is configured to accept that a user adds a resource and defines an ID of the resource; and
the resource management system is configured to store a source file converted from the data in the resource editor by a resource compiling tool, wherein the data includes the added resource and the ID thereof.

12. The system according to claim 11, **characterized in that** the resource editor is contained in a resource management system of a personal computer (PC).
